(19) **Europäisches Patentamt / European Patent Office / Office européen des brevets**

(11) **EP 3 395 424 A1**

(12) **EUROPEAN PATENT APPLICATION**

(43) Date of publication:
**31.10.2018 Bulletin 2018/44**

(51) Int Cl.:
**B01D 15/40** (2006.01)    **B01J 20/285** (2006.01)
**B01J 20/281** (2006.01)

(21) Application number: **18169953.9**

(22) Date of filing: **27.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2017   JP 2017090764**

(71) Applicant: **Shimadzu Corporation
Kyoto 604-8511 (JP)**

(72) Inventors:
• FUJITO, Yuka
  Kyoto-shi,, Kyoto 6048511 (JP)
• ISHII, Risa
  Hitachi-shi,, Ibaraki 3178555 (JP)
• BUTSUGAN, Michio
  Hitachi-shi,, Ibaraki 3178555 (JP)
• SAKURAI, Keita
  Hitachi-shi,, Ibaraki 3178555 (JP)

(74) Representative: **Webster, Jeremy Mark et al
Mewburn Ellis LLP
City Tower
40 Basinghall Street
London EC2V 5DE (GB)**

(54) **SEPARATION METHOD AND ANALYSIS METHOD**

(57)    A sample, carbon dioxide in a supercritical state, and a modifier are introduced into a separation column (120) disposed on the upstream side of a back pressure control valve (140), and components included in the sample are separated. The separation column is packed with polymer beads as a packing material. The sample thus separated may be further supplied to an analysis by chromatography and/or a mass analysis.

## FIG. 1

EP 3 395 424 A1

**Description**

TECHNICAL FIELD

The present invention relates to a separation method and an analysis method for a sample based on supercritical fluid chromatography.

BACKGROUND ART

A fluid having a temperature and a pressure exceeding the critical point (supercritical fluid) has features of having a superior ability to dissolve a substance compared to a gas, and having low viscosity and high diffusibility compared to a liquid. Supercritical fluid chromatography (SFC) that uses a supercritical fluid as a main mobile phase is capable of realizing a high-speed analysis by liquid transport at a high flow rate, or a high-resolution analysis by column extension, compared to liquid chromatography. As the supercritical fluid, carbon dioxide (critical temperature: 31°C, critical pressure: 7.4 MPa) is generally used.

Supercritical fluid carbon dioxide is non-polar and exhibits solubility similar to that of n-hexane. Therefore, SFC using supercritical fluid carbon dioxide only as the mobile phase is adequate for the separation and analysis of non-polar compounds. Meanwhile, since supercritical fluid carbon dioxide is compatible with polar organic solvents such as methanol, ethanol, and acetonitrile, when the mobile phase is imparted with polarity by adding these polar organic solvents as modifiers, separation and analysis based on SFC of a large number of substances having a wide range of polarity, ranging from non-polar substances to polar substances, are enabled (see, for example, Patent Literature 1).

Regarding the packing material for the separation column of SFC, from the viewpoints of having high pressure resistance and not easily undergoing swelling or shrinkage even in a case in which the mixing ratio between carbon dioxide and the modifier is changed, silica gel or a silica support having a chemically modified surface is used.

PRIOR ART DOCUMENT

[Patent Literature 1] JP-A-2015-215320

SUMMARY OF THE INVENTION

TECHNICAL PROBLEM

The inventors of the present invention found that in regard to SFC, when a sample is introduced into a separation column, and then elution is performed while the modifier concentration is varied, there are occasions in which the peaks of components having a long retention time (mainly a polar substance) show tailing, and thereby the separation performance is deteriorated. In view of such problems, an object of the present invention is to provide a separation method and an analysis method, which are capable of realizing high separative properties for a wide variety of substances.

SOLUTION TO PROBLEM

The inventors of the present invention conducted an investigation, and as a result, the inventors found that when polymer beads are used as a packing material for a separation column of SFC, sharp peaks can be obtained compared to the case of using silica gel, and the separation performance can be enhanced. Thus, the inventors completed the invention.

The invention relates to a method for separating a component included in a sample by introducing a sample, carbon dioxide in a supercritical state, and a modifier into a separation column disposed on the upstream side of the back pressure control valve of a chromatograph (supercritical fluid chromatography: SFC). The separation column is packed with polymer beads as a packing material.

The average particle size of the polymer beads is, for example, 1 to 10 $\mu$m. Regarding the polymer beads, polymer beads in which both the degree of swelling obtainable at the time of absorbing tetrahydrofuran (THF) and the degree of swelling obtainable at the time of absorbing methanol are 1.4 or less, are preferably used. It is preferable that the polymer beads include a crosslinked polymer. An example of the crosslinked polymer may be a crosslinked polymer having a structural unit derived from a polyfunctional monomer such as divinylbenzene or a di(meth)acrylic acid ester. The degree of crosslinking of the crosslinked polymer is preferably 50% or higher.

A sample that has been separated by SFC may be further supplied to an analysis based on chromatography or mass analysis.

EFFECTS OF THE INVENTION

By using polymer beads as a packing material for the separation column of SFC, tailing of peaks of components to be separated is suppressed, and thus the separation performance can be enhanced.

BRIEF DESCRIPTION OF THE DRAWINGS

Fig. 1 is a schematic configuration diagram of a supercritical fluid chromatograph.
Fig. 2 shows chromatograms of naptalam and pymetrozine of Experimental Examples and Comparative Examples.

DESCRIPTION OF EMBODIMENTS

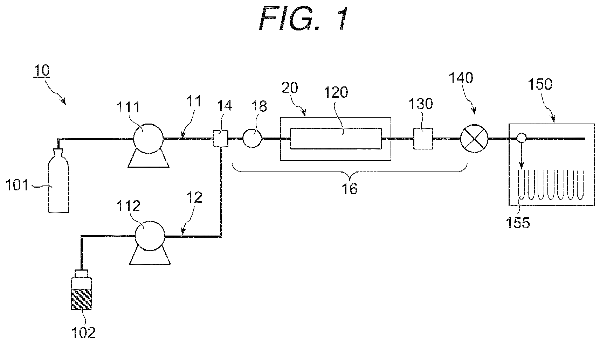

According to the invention, separation and analysis of a sample are carried out by supercritical fluid chromatography (SFC) using a supercritical fluid as a mobile phase. Fig. 1 is a schematic configuration diagram illustrating a configuration example of a supercritical fluid chromatograph. In the chromatograph 10 illustrated in Fig. 1, a supercritical fluid flow channel 11 that transports carbon dioxide accommodated in a bomb 101 by a pressurizing pump 111, and a modifier flow channel 12 that transports a modifier accommodated in a solvent container 102 by a solvent pump 112 are connected to a mixer 14. Regarding the modifier, a polar organic solvent such as methanol, ethanol, isopropanol, or acetonitrile is used.

An analysis flow channel 16 that transports the mobile phase from the mixer 14 is provided with, from the upstream side, a sample injection part 18, a separation column 120, a detector 130, and a back pressure control valve 140, and a collection unit 150 that accommodates a plurality of collection containers 155 is disposed on the downstream side of the back pressure control valve 140. The separation column 120 is accommodated in a column oven 20 and is maintained at a constant temperature. The back pressure control valve 140 has an effect of maintaining the interior of the analysis flow channel 16 at a predetermined pressure.

When the temperature of the separation column 120 reaches a set value, carbon dioxide is introduced from the bomb 101 into the analysis flow channel 16 via the pressurizing pump 111 provided on the flow channel 11. When the pressure of the analysis flow channel 16 is adjusted to a pressure exceeding the critical pressure of carbon dioxide (7.4 MPa) by means of the pressurizing pump 111 and the back pressure control valve 140, and the temperature of the separation column 120 is set to a temperature exceeding the critical temperature of carbon dioxide (31°C), carbon dioxide is brought into a supercritical state in the separation column 120.

The sample introduced into the analysis flow channel 16 through the sample injection part 18 is sent into the separation column 120 together with the mobile phase. The separation column 120 is packed with a packing material. As will be described in detail below, in this invention, polymer beads are used as the packing material used to pack the separation column 120.

In the chromatograph 10, the pressure of the back pressure control valve 140, the proportions of supercritical carbon dioxide and the modifier in the mobile phase (gradient program), the temperature of the separation column 120, sample injection through the sample injection part 18, and collection of the separated sample (fractionation) by the collection unit 150 are managed by a control unit, which is not shown in the diagram. In the analysis operation after sample injection, carbon dioxide and the modifier are sent to the flow channels 11 and 12 by the pressurizing pump 111 and the solvent pump 112, respectively, and the two are mixed at the mixer 14. The resulting mixture is introduced into the analysis flow channel 16 as a mobile phase. Subsequently, the flow rates of the pumps 111 and 112 are regulated so that the proportions of carbon dioxide and the modifier vary over time. The sample introduced into the separation column 120 is separated into the respective components, and the components are eluted from the separation column 120 and are detected at the detector 130. As the detector 130, for example, a visible-ultraviolet spectrometer is used. The sample that has been separated into the respective components passes through the back pressure control valve 140 and is fractionated into the collection containers 155 inside the collection unit 150 together with the mobile phase.

According to the invention, polymer beads are used as the packing material for the separation column 120. In the case of using silica gel or chemically modified silica as the packing material for the separation column, the peaks of components having a particularly long elution time show tailing, and thus the separation performance tends to deteriorate. In this regard, when predetermined polymer beads are used, sharp peaks can be obtained, and thus the separation performance can be enhanced.

According to the investigation of the present inventors, when silica gel is used as a packing material for the separation column, there are occasions in which even a component that is normally separated and gives a sharp peak in liquid chromatography (LC), shows tailing of the peak in SFC, and particularly, the peaks of compounds having functional groups such as ammonium ion, an amino group, a nitro group, a cyano group, a hydroxyl group, a carboxyl group, an amide, a carbonyl, a pyridyl group, and a thiocyanate group tend to show tailing.

It is speculated that tailing in the case of using a silica packing material is attributed to an interaction such as coordination or ionic adsorption of the component as an object of separation with the residual metal remaining on silica gel or the silica surface. In SFC, since the type or concentration of the salt that can be added to the modifier (for example, an ammonium salt) is limited from the viewpoint of compatibility with supercritical fluid carbon dioxide, it is contemplated that an interaction between the column packing material and the component as an object of separation may easily affect elution.

Even when silica having chemically modified surface is used as the packing material of the separation column, similarly to the case of modified silica, peak tailing occurs in the SFC chromatogram. It is speculated that this is attributed to an interaction between the residual metal remaining on silica gel or the silanol group or the like remaining after chemical modification of silica and the component as an object of separation.

When polymer beads are used as the packing material, it is speculated that since a strong interaction such as coordination with a metal is not likely to occur between the component as an object of separation and the packing material, sharp peaks can be obtained, compared to the case of using silica gel or chemically modified silica.

Examples of the material for the polymer beads used for the column packing material include an acrylic polymer, a styrene-based polymer, a polyacrylamide-based polymer, and a cellulose-based polymer. In SFC using supercritical fluid carbon dioxide as a mobile phase, since a pressure exceeding the critical pressure of carbon dioxide (7.4 MPa) is applied to the separation column 120 disposed in the analysis flow channel 16, the polymer beads working as the packing material are required to have pressure resistance. Furthermore, the polymer beads are required to have high solvent resistance, so that swelling or shrinkage does not occur even when the mixing ratio between carbon dioxide and the modifier is varied. Therefore, regarding the polymer beads, polymer beads having a low degree of swelling in a solvent are preferably used.

It is preferable that the polymer beads used as a column packing material contain a crosslinked polymer. It is preferable for the polymer beads that both the degree of swelling obtainable when the polymer beads absorb tetrahydrofuran, and the degree of swelling obtainable when the polymer beads absorb methanol are 1.4 or less. When polymer beads having such a low degree of swelling are used, satisfactory peak shapes are obtained. Also, since polymer beads have high durability, satisfactory analysis results tend to be obtained even in the case of performing repeated analyses. Furthermore, since polymer beads having a low degree of swelling enable a sufficient increase in the packing pressure at the time of packing of a column, deterioration of the analysis performance by SFC can be suppressed.

The degree of swelling of polymer beads is determined based on the volume change occurring before and after the process of dispersing the polymer beads in a solvent. The degree of swelling obtainable when the polymer beads absorb tetrahydrofuran, and the degree of swelling obtainable when the polymer beads absorb methanol are more preferably 1.3 or less, and even more preferably 1.2 or less. The degree of swelling is generally 1.0 or greater.

The average particle size of the polymer beads is desirably 10 $\mu$m or less, 5 $\mu$m or less, or 4 $\mu$m or less, from the viewpoint that a column having a high theoretical plate number is likely to be obtained. From the viewpoint of suppressing an excessive increase in the column pressure at the time of analysis, the average particle size of the polymer beads is desirably, for example, 1 $\mu$m or more, or 2 $\mu$m or more.

From the viewpoint of increasing the theoretical plate number of the column, the CV (coefficient of variation) value, which is an index representing the dispersity of the particle size (diameter) of the polymer beads, is preferably smaller, and for example, the CV value is desirably 25% or less, 20% or less, 15% or less, or 10% or less. The lower limit of the CV value is not particularly limited; however, the lower limit is generally 1% or greater. For the purpose of adjusting the average particle size and the CV value, or the like, the polymer beads may be classified using an arbitrary sieve or the like.

As the degree of crosslinking of the polymer is higher, the degree of swelling of the polymer beads tends to be smaller. The degree of crosslinking of the crosslinked polymer included in the polymer beads is, for example, 50% or higher, 80% or higher, or 90% or higher. When the degree of crosslinking is within the range described above, the polymer is not easily affected by the supercritical fluid, and the analysis performance can be enhanced. The degree of crosslinking of the crosslinked polymer is defined as the mixing proportion of a crosslinkable monomer in the monomers used for polymerization, and as the mass proportion of a crosslinkable monomer based on the total mass of polymerizable monomers.

A crosslinkable monomer is a compound having two or more polymerizable functional groups, and examples include divinyl compounds such as divinylbenzene, divinylbiphenyl, and divinylnaphthalene; diallyl phthalate and isomers thereof; triallyl isocyanurate and derivatives thereof; and a polyfunctional (meth)acrylic acid ester. The crosslinkable monomers may be used singly or in combination of two or more kinds thereof. Examples of the polyfunctional (meth)acrylic acid ester include a di(meth)acrylic acid ester and a trifunctional or higher-functional (meth)acrylic acid ester.

An example of the di(meth)acrylic acid ester may be an alkanediol di(meth)acrylate in which two (meth)acrylate moieties are bonded to an alkylene group. The number of carbon atoms of the alkylene group may be, for example, 1 to 20, or 1 to 5. The alkylene group may be any of a linear group, a branched group, or a cyclic group. The alkylene group may have a substituent such as a hydroxyl group.

Examples of the alkanediol di(meth)acrylate include 1,3-butanediol diacrylate, 1,4-butanediol di(meth)acrylate, 1,5-pentanediol di(meth)acrylate, 1,6-hexanediol di(meth)acrylate, 1,7-heptanediol di(meth)acrylate, 1,8-octanediol di(meth)acrylate, 3-methyl-1,5-pentanediol di(meth)acrylate, 1,9-nonanediol di(meth)acrylate, 1,10-decanediol di(meth)acrylate, neopentyl glycol di(meth)acrylate, and glycerol dimethacrylate.

Other examples of the di(meth)acrylic acid ester include di(meth)acrylates such as ethoxylated bisphenol A-based di(meth)acrylate, propoxylated ethoxylated bisphenol A-based di(meth)acrylate, tricyclodecane dimethanol di(meth)acrylate, 1,1,1-trishydroxymethylethane di(meth)acrylate, and ethoxylated cyclohexanedimethanol di(meth)acrylate; and (poly)alkylene glycol-based di(meth)acrylates such as (poly)ethylene glycol di(meth)acrylate, (poly)propylene glycol di(meth)acrylate, and (poly)tetramethylene glycol di(meth)acrylate.

Examples of the trifunctional or higher-functional (meth)acrylate include trimethylolpropane tri(meth)acrylate, tetramethylolmethane tri(meth)acrylate, tetramethylolpropane tetra(meth)acrylate, pentaerythritol tri(meth)acrylate, 1,1,1-trishydroxymethylethane tri(meth)acrylate, and 1,1,1-trishydroxymethylpropane triacrylate.

Among these crosslinkable monomers, from the viewpoint that a polymer having a high crosslinking density (polymer having a high proportion of a polyfunctional monomer-derived structure) is easily obtained, and the degree of swelling of the polymer beads can be made smaller, for example, one or more selected from the group consisting of divinylbenzene and a di(meth)acrylic acid ester may be used. That is, the crosslinked polymer may include a divinylbenzene-derived structural unit and/or a di(meth)acrylic acid ester-derived structural unit.

A monofunctional monomer may also be used together with the crosslinkable monomer. Examples of the monofunctional monomer include monofunctional (meth)acrylic acid esters such as methyl acrylate, ethyl acrylate, propyl acrylate, n-butyl acrylate, isobutyl acrylate, hexyl acrylate, 2-ethylhexyl acrylate, n-octyl acrylate, dodecyl acrylate, lauryl acrylate, stearyl acrylate, 2-chloroethyl acrylate, phenyl acrylate, methyl $\alpha$-chloroacrylate, methyl methacrylate, ethyl methacrylate, propyl methacrylate, n-butyl methacrylate, isobutyl methacrylate, hexyl methacrylate, 2-ethylhexyl methacrylate, n-octyl methacrylate, dodecyl methacrylate, lauryl methacrylate, and stearyl methacrylate; styrene and derivatives thereof, such as styrene, o-methylstyrene, m-methylstyrene, p-methylstyrene, $\alpha$-methylstyrene, o-ethylstyrene, m-ethylstyrene, p-ethylstyrene, 2,4-dimethylstyrene, p-n-butylstyrene, p-t-butylstyrene, p-n-hexylstyrene, p-n-octylstyrene, p-n-nonylstyrene, p-n-decylstyrene, p-n-dodecylstyrene, p-methoxystyrene, p-phenylstyrene, p-chlorostyrene, and 3,4-dichlorostyrene; vinyl esters such as vinyl acetate, vinyl propionate, vinyl benzoate, and vinyl butyrate; N-vinyl compounds such as N-vinylpyrrole, N-vinylcarbazole, N-vinylindole, and N-vinylpyrrolidone; fluorine-containing monomers such as vinyl fluoride, vinylidene fluoride, tetrafluoroethylene, hexafluoropropylene, trifluoroethyl acrylate, and tetrafluoropropyl acrylate; and conjugated dienes such as butadiene and isoprene. These may be used singly or in combination of two or more kinds thereof.

The polymer beads may be such that the entirety is formed from a crosslinked polymer, or the beads may partially have a crosslinked polymer. From the viewpoint of lowering the degree of swelling, it is preferable that a crosslinked polymer is included in at least the outer layer of the polymer beads. Polymer beads having a crosslinked polymer in the outer layer are obtained by, for example, a seed polymerization method.

Generally, as the particle size of the beads is smaller, the theoretical plate number of the column tends to become larger. Generally, for the polymer beads, it may be difficult to form particles having a small particle size compared to silica gel or the like; however, it is easy to form particles having a small particle size by the seed polymerization method.

A seed polymerization method is a method of swelling seed particles in an emulsion including a polymerizable monomer, absorbing the polymerizable monomer into the seed particles, and then polymerizing the polymerizable monomer. Examples of the seed particles include (meth)acrylate-based particles and styrene-based particles.

(Meth)acrylate-based particles are obtained by polymerization of a (meth)acrylic acid ester. Examples of the (meth)acrylic acid ester include (meth)acrylic acid esters having a linear or branched alkyl group as previously mentioned. Styrene-based particles can be obtained by polymerization of styrene-based monomers such as styrene, p-methylstyrene, p-chlorostyrene, chloromethylstyrene, and $\alpha$-methylstyrene. As the monomers for obtaining seed particles, an allyl alcohol, an allyl phthalate, an allyl ether, and the like may be used in combination, in addition to the (meth)acrylic acid esters and styrene-based monomers. These monomers may be used singly or in combination of two or more kinds thereof.

The seed particles can be synthesized using the monomer by, for example, a known method such as an emulsion polymerization method, a soap-free emulsion polymerization method, or a dispersion polymerization method. The average particle size of the seed particles may be adjusted according to the design particle size of the polymer beads thus obtainable. The average particle size of the seed particles is desirably, for example, 2.0 $\mu$m or less, or 1.5 $\mu$m or less, from the viewpoint of shortening the absorption time of the polymerizable monomer. The average particle size of the seed particles is desirably, for example, 0.1 $\mu$m or larger, or 0.5 $\mu$m or larger, from the viewpoint that seed particles which are uniform and close to a true spherical shape are efficiently obtained. From these viewpoints, the average particle size of the seed particles is preferably 0.1 to 2.0 $\mu$m, more preferably 0.5 to 2.0 $\mu$m, and even more preferably 0.5 to 1.5 $\mu$m.

The CV value of the seed particles is desirably, for example, 10% or less, or 7% or less, from the viewpoint of sufficiently securing uniformity of the polymer beads thus obtainable. The CV value of the seed particles is generally 1% or greater.

The average particle size of the polymer beads may be adjusted to be, for example, 2 to 10 times, or 2.5 to 7 times, with respect to the average particle size of the seed particles. By adjusting the average particle size of the polymer beads in the range described above, the particle size of the polymer beads becomes monodisperse, and the CV value of the particle size can be made smaller.

Polymer beads are obtained by adding seed particles to an emulsion including a polymerizable monomer and an aqueous medium, absorbing the polymerizable monomer into the seed particles, and then polymerizing the polymerizable monomer. The emulsion can be produced by a known method. For example, the emulsion is obtained by adding a polymerizable monomer to an aqueous medium, and dispersing the polymerizable monomer in the aqueous medium using a microemulsifying machine such as a homogenizer, an ultrasonic treatment machine, or a Nanomizer. The aqueous medium may be water, or a mixed medium of water and a water-soluble solvent (for example, a lower alcohol). The aqueous medium may include a surfactant. Regarding the surfactant, any of anionic, cationic, nonionic, and amphoteric surfactants may be used.

The emulsion may include, if necessary, a polymerization initiator such as an organic peroxide or an azo-based compound. The polymerization initiator can be used in an amount in the range of, for example, 0.1 to 7.0 parts by mass with respect to 100 parts by mass of the polymerizable monomer.

The emulsion may include a polymer dispersion stabilizer such as polyvinyl alcohol or polyvinylpyrrolidone, in order to enhance the dispersion stability of the seed particles. The polymer dispersion stabilizer can be used in an amount in the range of, for example, 1 to 10 parts by mass with respect to 100 parts by mass of the polymerizable monomer.

The emulsion may include a water-soluble polymerization inhibitor such as a nitrite, a sulfite, a hydroquinone, an ascorbic acid, a water-soluble vitamin B, citric acid, or a polyphenol. By incorporating a polymerization inhibitor, emulsion polymerization of the monomers in the emulsion can be suppressed.

The seed particles may be added directly to the emulsion, or may be added in a state in which the seed particles have been dispersed in an aqueous dispersing medium. For example, when an emulsion containing added seed particles is stirred for 1 to 24 hours at room temperature, the polymerizable monomer can be absorbed into the seed particles. When the emulsion is warmed to about 30°C to 50°C, absorption of the polymerizable monomer tends to be accelerated.

The mixing proportion of the polymerizable monomer with respect to the seed particles is not particularly limited; however, for example, from the viewpoint of efficiently producing polymer beads having a desired average particle size, the mixing proportion may be 800 parts by mass or more, or 1,500 parts by mass or more, with respect to 100 parts by mass of the seed particles. Meanwhile, for example, from the viewpoint of preventing the polymerizable monomer from undergoing suspension polymerization by itself in the aqueous medium, and efficiently producing polymer beads having a desired average particle size, the mixing proportion of the polymerizable monomer is desirably 100,000 parts by mass or less, or 35,000 parts by mass or less, with respect to 100 parts by mass of the seed particles. Since the seed particles swell by absorbing the polymerizable monomer, it can be determined whether absorption of the polymerizable monomer into the seed particles has been completed or not, by checking the expansion of the particle size of the seed particles using an optical microscope.

By polymerizing the polymerizable monomer that has been absorbed into the seed particles, polymer beads are obtained. The polymerization conditions are not particularly limited, and may be selected as appropriate according to the type of the monomer or the like. After completion of the polymerization, the aqueous medium is removed from the polymerization liquid by centrifugation or filtration as necessary, the polymer beads are washed with water and solvents and then dried, and thereby, the polymer beads are isolated.

The polymer beads may have a porous structure. For example, porous beads are obtained by accelerating phase separation at the time of performing seed polymerization, by using an organic solvent that is insoluble or sparingly soluble in the aqueous medium.

In this invention, separation and analysis of a sample can be carried out similarly to conventional SFC, except that predetermined polymer beads are used as a packing material for the separation column, and the configuration of the chromatogram is not limited to that illustrated in Fig. 1.

The solvent used at the time of packing the polymer beads into the column is not particularly limited as long as the solvent is a solvent in which the polymer beads can be dispersed, and examples include water, methanol, THF, acetonitrile, chloroform, ethylene glycol, and liquid paraffin. The packing pressure at the time of packing the polymer beads into the column may be adjusted to, for example, 10 MPa or higher, or 15 MPa or higher. By increasing the packing pressure, tailing of peaks in the SFC chromatogram is suppressed, and satisfactory peak shapes are likely to be obtained. From the viewpoint of suppressing any change in the polymer beads or damage of the column, the packing pressure may be adjusted to be, for example, 60 MPa or lower, or 50 MPa or lower.

In Fig. 1, a detector 130 is provided in the analysis flow channel 16 between the separation column 120 and the back pressure control valve 140; however, the detector is not an essential constituent. It is also acceptable that the detector is provided on the downstream side of the back pressure control valve.

In Fig. 1, a collection unit 150 for collecting the sample that has been separated by SFC is provided on the downstream side of the back pressure control valve 140; however, when it is not necessary to collect the sample, the collection unit is unnecessary. For example, in the case of performing an analysis such as identification or quantification of the separated components using a detector provided on the downstream side of the separation column, collection of the sample is unnecessary.

Meanwhile, in the case of performing a simultaneous analysis of a large number of components as in the case of a simultaneous analysis of residual agrochemicals in a food product, a sample that has been separated by SFC may be analyzed by chromatography such as liquid chromatography or gas chromatography, or a mass analysis. These analyses can be carried out by SFC in an online mode.

For example, a SFC-MS/MS analysis can be carried out by connecting a tandem quadrupole mass spectrometer on the downstream side of the back pressure control valve. In the case of performing SFC-MS, an ionization promoter such as formic acid or ammonia may be added to the mobile phase in order to promote ionization of the sample components in the mass analysis system. Furthermore, it is also acceptable that a makeup solution that serves as an ionization aid is supplied by a pump to the analysis flow channel 16 between the separation column 120 and the back pressure control valve 140. Regarding the makeup solution, for example, a solution obtained by incorporating an ionization promoter such as formic acid or ammonia into an organic solvent such as methanol or water can be used. A component detected by a mass analysis is identified by, for example, collating with a database.

EXAMPLES

Hereinafter, the invention will be more specifically described by way of Examples; however, the invention is not intended to be limited to the following Examples.

[Samples as object of analysis]

Standard agrochemical mixed solutions manufactured by Hayashi Pure Chemical Industry, Ltd. (PL2005 Pesticide GC/MS Mix I, II, III, IV, V, VI, and 7, PL2005 Pesticide LC/MS Mix I, II, III, 4, 5, 6, 7, 8, 9, and 10, and 53 Polar pesticides Mix (for STQ method)) were mixed, and thereby standard mixed solutions respectively including about 250 kinds of agrochemicals in an amount of 0.5 $\mu$g/mL each were produced.

[Column packing material]

In Comparative Example 1, a commercially available column for SFC (Shim-Pack UC-RP) packed with a silica packing material chemically modified with an octadecyl group and a polar functional group was used. In Example 1 and Example 2, columns packed with polymer beads obtained in the following Production Example 1 and Production Example 2, respectively, as a packing material were used.

<Synthesis Example for seed particles>

70 g of methyl methacrylate, 2.1 g of octanethiol, and 370 g of ion-exchanged water were introduced into a 500-mL of separable flask, and while the mixture was bubbled with nitrogen and also stirred with a stirring blade, the mixture was kept warm at 30°C for one hour. Subsequently, 0.875 g of potassium peroxodisulfate and 30 g of ion-exchanged water were added thereto, and the mixture was allowed to react for 6 hours at 70°C. Thus, seed particles were formed. The reaction liquid was cooled, subsequently agglomerates and fine particles in the reaction liquid were removed, and thereby a slurry of seed particles (solid content concentration: 3.5% by mass) was obtained. The agglomerates were removed by using a mesh having a mesh size of 75 $\mu$m. The fine particles were removed by treating the reaction liquid from which agglomerates had been removed (slurry that had passed through a sieve) using a centrifugal dehydrating machine, and discarding the supernatant by decantation.

The average particle size of the seed particles calculated from the particle size distribution measured using a particle size distribution measurement instrument (manufactured by MicroTracBEL Corp., trade name: MT-3300EX II) was 750 nm, and the CV value was 6.4%.

<Production Example 1 for polymer beads>

A mixture was obtained by introducing 100 g of divinylbenzene (purity 94%) as a crosslinkable monomer, and 36 g of toluene and 36 g of diethylbenzene as organic solvents into a 2-L separable flask, and 7.0 g of benzoyl peroxide as a polymerization initiator was dissolved in the mixture thus obtained. Subsequently, 1,240 g of ion-exchanged water, 96 g of ethanol, 32 g of an aqueous solution containing 40% by mass of triethanolamine lauryl sulfate as a surfactant, and 0.12 g of ascorbic acid as a polymerization inhibitor were further added to the solution, the mixture was ultrasonically dispersed for 10 minutes with an ultrasonic horn, and thus an emulsion was obtained. While the emulsion thus obtained was stirred with a stirring blade, 77 g of the seed particle slurry obtained in the Synthesis Example described above and 27 g of ion-exchanged water were added to the emulsion, and the mixture was kept warm at 30°C for 24 hours. Next, 120 g of an aqueous solution containing 6% by mass of polyvinyl alcohol as a dispersion stabilizer was added to the mixture, and the resulting mixture was polymerized for 8 hours at 80°C while the mixture was bubbled with nitrogen and then cooled. The particles thus obtained were washed sequentially with an ion-exchanged water/methanol mixed liquid and with acetone, and then the particles were subjected to wet classification with a sieve having a mesh size of 5 $\mu$m to remove aggregates. Particles were separated by filtration from the slurry after the aggregates had been removed, and the particles were dried. Thus, polymer beads were obtained.

<Production Example 2 for polymer beads>

A mixture was obtained by introducing 81 g of glycerol dimethacrylate (purity 93%) as a crosslinkable monomer, and 73 g of butyl acetate and 48 g of isoamyl alcohol as organic solvents into a 3-L separable flask, and 0.4 g of 2,2'-azobisisobutyronitrile as a polymerization initiator was dissolved in the mixture thus obtained. Next, 1,530 g of ion-exchanged water and 12 g of an aqueous solution containing 40% by mass of triethanolamine lauryl sulfate as a surfactant were further added to the mixture, subsequently the mixture was ultrasonically dispersed for 10 minutes with an ultrasonic horn, and thus an emulsion was obtained. While the emulsion thus obtained was stirred with a stirring blade, 14 g of the slurry of seed particles obtained in the Synthesis Example described above and 122 g of ion-exchanged water were added to the emulsion, and the mixture was kept warm at 30°C for one hour. Next, 121 g of an aqueous solution containing 6% by mass of polyvinyl alcohol as a dispersion stabilizer was added thereto, and the mixture was polymerized for 5 hours at 78°C while the mixture was bubbled with nitrogen and then cooled. Washing, classification, separation by filtration, and drying of the particles thus obtained were performed in the same manner as in Production Example 1, and thus polymer beads were obtained.

<Characteristics of polymer beads>

(Degree of crosslinking of polymer)

The degree of crosslinking was calculated from the mass proportion of the polyfunctional monomer (Production Example 1: divinylbenzene, Production Example 2: glycerol dimethacrylate) based on the total mass of polymerizable monomers.

(Particle size)

The particle size distribution of the polymer beads was measured using a particle size distribution measurement instrument (manufactured by Beckman Coulter, Inc., trade name: Multisizer 4e), and the average particle size and the CV value of the particle size were calculated.

(Degree of swelling)

1 g of polymer beads that had been dried for 3 hours or longer at 60°C in a vacuum dryer were introduced into a 10-ml graduated cylinder, the graduated cylinder was tapped 20 or more times, and the polymer beads were left to stand. Subsequently, the scale of the graduated cylinder was read, and the value was designated as the apparent volume Vd (ml) of the polymer beads. A solvent (THF or methanol) was added to the graduated cylinder such that the total amount of combining the polymer beads and the solvent would be 10 ml, and the mixture was left to stand for 24 hours or longer at room temperature (20°C). Subsequently, the apparent volume of the polymer beads deposited at the bottom of the graduated cylinder, Vw (ml), was read out from the scale of the graduated cylinder, and thus the degree of swelling S was calculated by the following formula.

$$S = Vw/Vd$$

The characteristics of the polymer beads of Production Example 1 and Production Example 2 are shown in TABLE 1.

TABLE 1

| | Crosslinked polymer | | Bead particle size | | Degree of swelling of beads | |
|---|---|---|---|---|---|---|
| | Type | Degree of crosslinking (%) | Average particle size (μm) | CV (%) | THF | Methanol |
| Production Example 1 | Divinylbenzene-based | 94 | 3.1 | 18 | 1.32 | 1.31 |
| Production Example 2 | Acrylic | 93 | 3.5 | 7 | 1.05 | 1.37 |

<Production of column for SFC>

2.4 g of the polymer beads obtained in Production Example 1 and 13.6 g of ultrapure water were introduced into a 100-mL beaker, and the particles were dispersed and mixed while being ultrasonically treated. Thus, a slurry for packing was produced. Next, the slurry for packing was caused to flow into a stainless steel packer equipped with a stainless steel column having a size of 4.6 mmφ × 150 mm, and the column was tightly sealed. Subsequently, the column was pressurized to 18 MPa with a plunger type packing pump (GL Sciences Inc., PU713 pump), and thereby the polymer beads were packed into the column. Thus, a column for SFC of Example 1 was produced. A column for SFC of Example 2 was produced by introducing 1.3 g of the polymer beads obtained in Production Example 2 and 12.7 g of THF into a 100-mL beaker, and packing the polymer beads into the column in the same manner as described above.

[Comparative Example 1]

A column (Shim-Pack UC-RP) packed with a silica packing material was mounted as a separation column for SFC in a supercritical fluid chromatograph system (SHIMADZU CORPORATION, Nexera UC), and an analysis of the samples as objects of analysis described above was performed by SFC-MS/MS. The analysis conditions were as follows.

Mobile phase A: Carbon dioxide (supercritical fluid), B: 1 mM ammonium formate-methanol solution (modifier)
Flow rate: 3 mL/min
Gradient program

0 to 12 minutes: %B = 2 to 10 gradient
12 to 20 minutes: %B = 10 to 80 gradient
20 to 25 minutes: %B = 80
25 to 30 minutes: %B = 2

Makeup solution: Methanol
Makeup flow rate: 0.1 mL/min

[Example 1]

The separation column was changed to the column packed with the polymer beads of Production Example 1 described above, and the flow rate of the mobile phase of SFC and the gradient program were changed as follows. The other conditions were maintained similar to those of Comparative Example 1, and thus an analysis of the samples as objects of analysis described above was performed.

Flow rate: 1.0 mL/min
Gradient program

0 to 20 minutes: %B = 2 to 80 gradient
20 to 25 minutes: %B = 80
25 to 30 minutes: %B = 2

[Example 2]

The separation column was changed to the columns packed with the polymer beads of Production Example 2 described above, and the flow rate of the mobile phase of SFC and the gradient program were changed to 0.35 mL/min. The other conditions were maintained similar to those of Example 1, and thus an analysis of the samples as objects of analysis described above was performed.

[Analysis results]

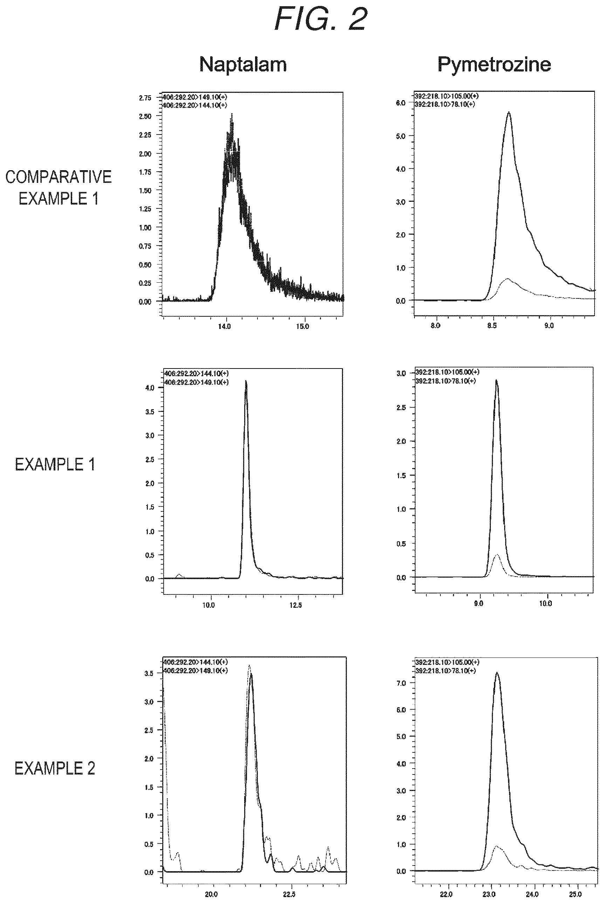

MRM chromatograms of naptalam and pymetrozine obtained by the SFC-MS analyses of Comparative Example 1, Example 1, and Example 2 are shown in Fig. 2.
As shown in Fig. 2, in Comparative Example 1 in which chemically modified silica was used as the packing material, peak tailing of naptalam and pymetrozine was observed. In contrast, in Example 1 and Example 2 in which polymer beads were used, tailing was suppressed with high symmetry of the peak in both the cases of naptalam and pymetrozine. Thus, it is understood that the separation performance by SFC was enhanced.

**Claims**

1. A separation method comprising introducing a sample, carbon dioxide in a supercritical state, and a modifier into a separation column (120) disposed on the upstream side of a back pressure control valve (140) of a chromatograph, and separating components included in the sample,
   wherein polymer beads are packed as a packing material in the separation column.

2. The separation method according to claim 1,
   wherein the polymer beads are such that both the degree of swelling obtainable when the polymer beads absorb tetrahydrofuran and the degree of swelling obtainable when the polymer beads absorb methanol are 1.4 or less, and the polymer beads contain a crosslinked polymer.

3. The separation method according to claim 2, wherein the crosslinked polymer has one or more selected from the group consisting of a structural unit derived from divinylbenzene and a structural unit derived from a di(meth)acrylic acid ester.

4. The separation method according to claim 2 or 3, wherein the degree of crosslinking of the crosslinked polymer is 50% or higher.

5. The separation method according to any one of claims 1 to 4, wherein the average particle size of the polymer beads is 1 to 10 $\mu$m.

6. An analysis method comprising analyzing the sample separated into components by the method according to any one of claims 1 to 5, by chromatography and/or a mass analysis.

# FIG. 1

# FIG. 2

Naptalam           Pymetrozine

COMPARATIVE
EXAMPLE 1

EXAMPLE 1

EXAMPLE 2

Europäisches
Patentamt

European
Patent Office

Office européen
des brevets

## EUROPEAN SEARCH REPORT

Application Number

EP 18 16 9953

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RICHARD J. ANSELL ET AL: "Imprinted polymers for chiral resolution of ( )-ephedrine, 4: Packed column supercritical fluid chromatography using molecularly imprinted chiral stationary phases", JOURNAL OF CHROMATOGRAPHY A, vol. 1264, 1 November 2012 (2012-11-01), pages 117-123, XP055507141, AMSTERDAM, NL ISSN: 0021-9673, DOI: 10.1016/j.chroma.2012.09.069 * the whole document * | 1-6 | INV. B01D15/40 B01J20/285 B01J20/281 |
| X | B. GEMMEL ET AL: "Separation of oligomers of medium polarity by packed column supercritical fluid chromatography", CHROMATOGRAPHIA, vol. 27, no. 11-12, 1 June 1989 (1989-06-01), pages 605-610, XP055507532, | 1,2,4-6 | |
| A | * the whole document * | 3 | TECHNICAL FIELDS SEARCHED (IPC) |
| X | EP 2 876 439 A1 (DAICEL CORP [JP]) 27 May 2015 (2015-05-27) * paragraph [0015] - paragraph [0017] * * paragraph [0053] - paragraph [0056] * | 1 | B01D B01J G01N |
| X | EP 2 031 388 A1 (UNIV NAGOYA NAT UNIV CORP [JP]; DAICEL CHEM [JP]) 4 March 2009 (2009-03-04) * paragraph [0027] - paragraph [0034] * * paragraph [0058] - paragraph [0061] * | 1 | |
| X | US 4 864 033 A (BRADSHAW JERALD S [US] ET AL) 5 September 1989 (1989-09-05) * column 22, line 41 - column 24, line 10 * | 1 | |

-/--

The present search report has been drawn up for all claims

| Place of search | Date of completion of the search | Examiner |
|---|---|---|
| Munich | 18 September 2018 | Fourgeaud, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 18 16 9953

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/244548 A1 (BONIFACE KYLE J [CA] ET AL) 25 August 2016 (2016-08-25)<br>* paragraph [0138] *<br>* paragraph [0143] - paragraph [0147] *<br>----- | 1-6 | |

TECHNICAL FIELDS
SEARCHED (IPC)

The present search report has been drawn up for all claims

| Place of search | Date of completion of the search | Examiner |
|---|---|---|
| Munich | 18 September 2018 | Fourgeaud, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 16 9953

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2018

| Patent document cited in search report | | | Publication date | Patent family member(s) | | | Publication date |
|---|---|---|---|---|---|---|---|
| EP 2876439 | A1 | | 27-05-2015 | CN<br>EP<br>JP<br>JP<br>US<br>WO | 104471387 A<br>2876439 A1<br>6342328 B2<br>WO2014017280 A1<br>2015182943 A1<br>2014017280 A1 | | 25-03-2015<br>27-05-2015<br>13-06-2018<br>07-07-2016<br>02-07-2015<br>30-01-2014 |
| EP 2031388 | A1 | | 04-03-2009 | CN<br>EP<br>JP<br>JP<br>KR<br>US<br>WO | 101490544 A<br>2031388 A1<br>5540368 B2<br>WO2007129659 A1<br>20090010236 A<br>2009124798 A1<br>2007129659 A1 | | 22-07-2009<br>04-03-2009<br>02-07-2014<br>17-09-2009<br>29-01-2009<br>14-05-2009<br>15-11-2007 |
| US 4864033 | A | | 05-09-1989 | NONE | | | |
| US 2016244548 | A1 | | 25-08-2016 | CA<br>EP<br>US<br>WO | 2924633 A1<br>3046968 A1<br>2016244548 A1<br>2015039247 A1 | | 26-03-2015<br>27-07-2016<br>25-08-2016<br>26-03-2015 |

EPO FORM P0459

For more details about this annex : see Official Journal of the European Patent Office, No. 12/82

**EP 3 395 424 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015215320 A